# EUROPÄISCHE PATENTSCHRIFT

(11) **EP 2 062 803 B1**
(45) Veröffentlichungstag und Bekanntmachung des Hinweises auf die Patenterteilung: **19.10.2011**
(21) Anmeldenummer: 08013974.4
(22) Anmeldetag: 05.08.2008
(51) Int. Cl.: B62D 21/06, B62D 21/11

(54) **Kraftfahrzeug**
Motor vehicle
Véhicule automobile

(30) Priorität: 24.11.2007 DE 102007056674
(43) Veröffentlichungstag der Anmeldung: 27.05.2009
(73) Patentinhaber: Dr. Ing. h.c. F. Porsche AG, 70435 Stuttgart (DE)
(72) Erfinder: Oezkan, Ali, 71229 Leonberg (DE); Moessinger, Oliver, 76694 Forst (DE); Hunn, Thomas, 71272 Renningen (DE); Lorenz, Kay, 09526 Olbernau (DE); Bohnert, Klaus, 75417 Muehlacker (DE); Ujhasi, Marco, 71272 Renningen (DE)

(56) Entgegenhaltungen:
- DE-A1- 19 532 531
- DE-A1-102004 018 977

## Beschreibung

Die vorliegende Erfindung betrifft ein Kraftfahrzeug mit einem Hinterachsquerträger, von dem V-förmig nach vorne zwei Diagonalstreben abgehen, gemäß dem Oberbegriff des Anspruchs 1.

Aus der DE 10 2004 018 977 A1 ist ein gattungsgemäßes Kraftfahrzeug bekannt, dessen Unterbodenbereich zumindest zwei aussteifende, jeweils von einer Karosserieanbindung mit einer Komponente in Richtung auf eine vertikale Längsmittelebene zuverlaufende Streben zugeordnet sind. Frei unter dem Unterboden und mit Abstand zu diesem angeordnet, ist ein Verbindungsträger, an welchem diese Streben in dichtem Abstand bezüglich der Fahrzeugquerrichtung sowie zwei weitere Streben gehalten sind, die sich an von dort jeweils mit einer Komponente in Richtung von der vertikalen Längsmittelebene weg erstrecken. Hierdurch soll insbesondere die Torsionssteifigkeit des Kraftfahrzeuges um die Fahrzeuglängsachse verbessert werden.

Aus der DE 102 14 372 C1 ist ein weiteres Kraftfahrzeug bekannt, bei dem ein Boden der Karosserie durch V-förmig angeordnete Versteifungsstreben versteift ist.

Weitere Einrichtungen zur Versteifung einer Kraftfahrzeugkarosserie sind beispielsweise aus der DE 39 05 650 C2, aus der EP 0 393 397, aus der DE 43 18 226 C2, aus der DE 43 29 532 A1 sowie aus der DE 42 44 216 C2 bekannt.

Die DE 195 32 531 A zeigt ein Kraftfahrzeug, an dessen Unterbodenbereich zwei V-förmig verlaufende Diagonalstreben angeordnet sind, wobei die jeweils vorderen Enden der beiden Diagonalstreben an einen Fahrzeuglängsträger angebunden sind. Die hinteren Enden der beiden Diagonalstreben sind mit Längsseiten einer durch ein Blechteil gebildeten Trägerplatte verbunden, wobei die Trägerplatte zwei über einen integrierten Querträger miteinander verbundene trapezförmige Segmente umfasst. Die Trägerplatte ist über eine vordere Verbindungsstelle an einen vorderen Querträger und über eine hintere Verbindungsstelle an eine Querstütze angebunden. Ferner ist die Trägerplatte mit zwei die Radführungslenker aufnehmenden Seitenträgern verbunden. Im hinteren Segment der Trägerplatte ist ein Durchbruch zur Anordnung eines querverlaufenden Stabilisators angeordnet.

Die vorliegende Erfindung beschäftigt sich mit dem Problem, eine verbesserte oder zumindest eine andere Ausführungsform für ein gattungsgemäßes Kraftfahrzeug anzugeben, bei welchem eine besonders effektive Aussteifung, insbesondere bezüglich der Torsion um die Fahrzeuglängsachse, realisierbar ist.

Die Erfindung löst diese Aufgabe durch den Gegenstand des unabhängigen Anspruchs 1. Vorteilhafte Ausführungsformen sind Gegenstand der abhängigen Ansprüche.

Die Erfindung beruht auf dem allgemeinen Gedanken, eine in sich geschlossene, ringartige Aussteifungsstruktur im Unterbodenbereich zwischen einem Hinterachsquerträger und einem V-förmigen Aussteifungsbügel anzuordnen und dadurch ein Torsions-Schub-Feld zu erzeugen. Der Hinterachsquerträger weist zwei in Fahrtrichtung nach vorne V-förmig aufgehende Diagonalstreben auf, die mit ihrem jeweils vorderen Ende an einer Fahrzeugkarosserie, insbesondere an einem Fahrzeuglängsträger, und mit ihrem jeweils hinteren Ende am Hinterachsquerträger angebunden sind. Die ringartig geschlossene Aussteifungsstruktur ist dabei in Fahrtrichtung gesehen hinter dem Hinterachsquerträger angeordnet und mit ihrem vorderen Ende an diesem angebunden bzw. abgestützt, während sie mit ihrem hinteren Ende über oben genannte V-förmig nach hinten abgehende Streben an hinteren Fahrzeuglängsträgern abgestützt ist. Durch die erfindungsgemäße ringartig geschlossene Aussteifungsstruktur wird im Vergleich zu herkömmlichen Diagonalstreben ein die Torsionssteifigkeit deutlich erhöhendes Schubfeld geschaffen, welches insbesondere eine Steigerung der dynamischen Torsions- und Biegesteifigkeit sowie eine deutliche Versteifung des Hinterwagens des Kraftfahrzeuges bewirkt. Insbesondere lassen sich durch eine derartige Aussteifungsstruktur während des Fahrbetriebs auftretende äußere Anregungen von Schwingungen, beispielsweise beim Überfahren von Fahrbahnunebenheiten, welche die Fahrsicherheit oder zumindest den Fahrkomfort beeinträchtigen können, deutlich reduzieren. Eine erfindungsgemäße Aussteifungsstruktur ist dabei insbesondere beim Einsatz in sogenannten Cabriolets mit selbsttragender Karosserie, die aufgrund des nicht starren Daches eine verringerte Steifigkeit aufweist, von großem Vorteil.

Zweckmäßig ist die ringartig geschlossene Aussteifungsstruktur von unten an den Hinterachsquerträger angeschlossen, insbesondere angeschraubt. Besonders die optionale Variante des Anschraubens der Aussteifungsstruktur an den Hinterachsquerträger bietet die Möglichkeit einer nachträglichen Montage der Aussteifungsstruktur am bereits an der Karosserie befestigten Hinterachsquerträger, wodurch auch eine Wartung bzw. im Reparaturfall ein Austausch der Aussteifungsstruktur deutlich einfacher realisiert werden kann. Auch bei der Produktion kann so eine einfache Differenzierung zwischen Coupe und Cabrio ermöglicht werden.

Bei einer weiteren vorteilhaften Ausführungsform der erfindungsgemäßen Lösung ist die ringartig geschlossene Aussteifungsstruktur aus einem Vierkantrohr aus Stahl ausgebildet. Hohlquerschnitte, wie sie beispielsweise von einem Vierkantrohr gebildet werden, besitzen eine hohe Biege- bzw. Torsionssteifigkeit und eignen sich dadurch besonders für die Verwendung als Aussteifungsbauteile. Gleichzeitig lässt sich durch derartige Hohlquerschnitte im Vergleich zu Vollprofilen das Gewicht deutlich reduzieren, was insbesondere im Sportwagenbau von großem Vorteil ist. Stahl besitzt zwar ein relativ hohes spezifisches Gewicht, jedoch auch eine hohe Festigkeit, so dass mit relativ dünnwandigen Stahlhohlprofilen bereits die geforderte Aussteifungswirkung erzielbar ist. Die Aussteifungsstruktur kann auch aus anderen schweißbaren Materialien (z.B. Aluminium) gefertigt sein.

Zweckmäßig ist die Aussteifungsstruktur als Träger einer Unterbodenverkleidung verwendbar bzw. ausgebildet. Die Unterbodenverkleidung, welche einen nicht unerheblichen Einfluss auf die Aerodynamik und damit das Fahrverhalten des Kraftfahrzeugs hat, muss zuverlässig von unten an der Karosserie des Kraftfahrzeuges befestigt werden. Hierzu sind eine Vielzahl von Befestigungspunkten erforderlich, welche unter Umständen, je nach Zerklüftung des Unterbodens, nur schwer erreichbar sind. Die im Wesentlichen parallel zu einer Fahrbahn bzw. zu einem Unterboden des Kraftfahrzeuges verlaufende ringförmig geschlossene Aussteifungsstruktur bietet dabei eine Vielzahl von möglichen Anbindungspunkten für die Befestigung einer Unterbodenverkleidung am Kraftfahrzeug. Die Aussteifungsstruktur bietet somit nicht nur eine verbesserte Versteifung der Karosserie, sondern zusätzlich auch die Möglichkeit, einzelne Unterbodenverkleidungsteile leicht am Kraftfahrzeug befestigen zu können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Aussteifungsstruktur,
- Fig. 2: eine an einem Kraftfahrzeug angeordnete Aussteifungsstruktur.

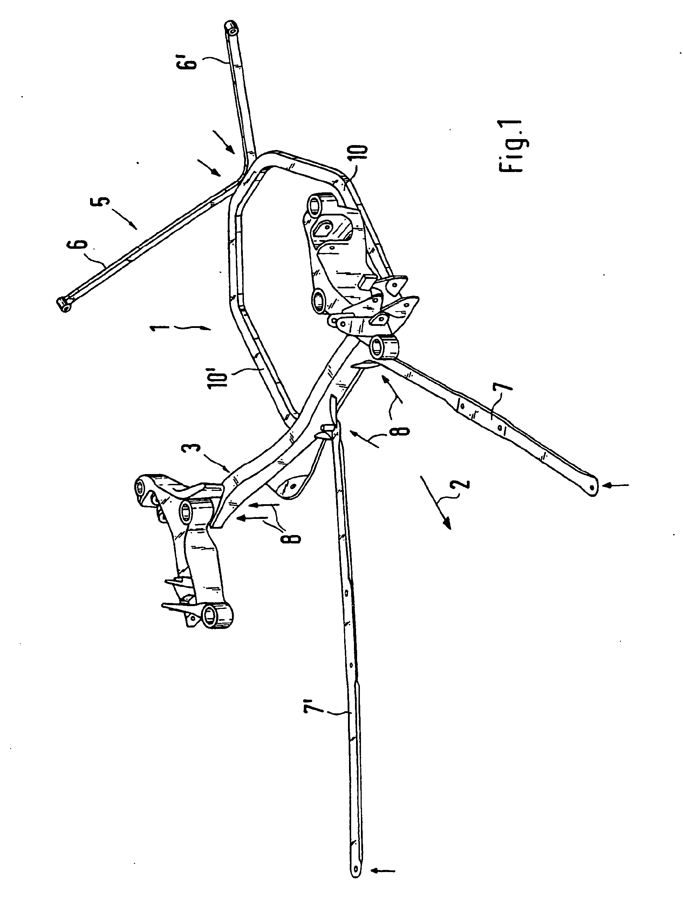

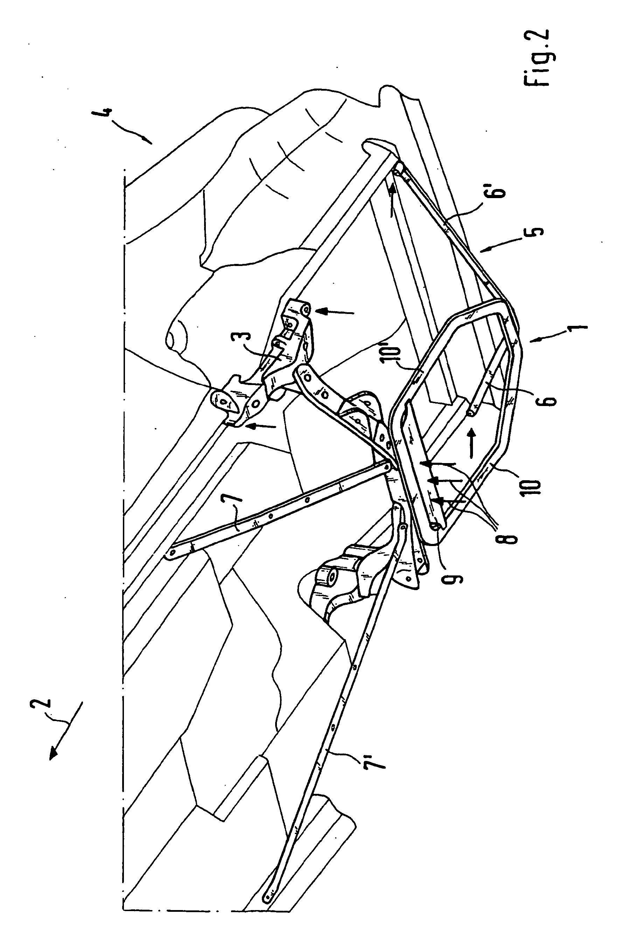

Entsprechend Fig. 1 ist eine erfindungsgemäße Aussteifungsstruktur 1 geschlossen ringförmig ausgebildet. Mit ihrem in Fahrtrichtung 2 (vergleiche Fig. 2) vorderen Ende ist sie an einen Hinterachsquerträger 3 eines Kraftfahrzeuges 4 (vergleiche hierzu Fig. 2) angebunden. Mit ihrem in Fahrtrichtung 2 hinteren Ende ist die Aussteifungsstruktur 1 an einen V-förmigen Bügel 5 angebunden, welcher zwei diagonal abgehende Streben 6 und 6' aufweist.

An ihren, der Aussteifungsstruktur 1 jeweils abgewandten Enden, sind die beiden diagonal abgehenden Streben 6 und 6' an einer Karosseriestruktur, insbesondere an hinteren Fahrzeuglängsträgern angebunden.

Von dem Hinterachsquerträger 3 in Fahrtrichtung 2 nach vorne gehen zwei Diagonalstreben 7 und 7' ab, welche mit ihrem jeweils hinteren Ende am Hinterachsquerträger 3 und mit ihrem jeweils vorderen Ende ebenfalls an einer Karosseriestruktur, insbesondere an seitlichen Schwellern, angebunden sind. Die Aussteifungsstruktur 1 bildet dabei unmittelbar in Fahrtrichtung 2 hinter dem Hinterachsquerträger 3 ein die Torsionssteifigkeit erhöhendes Schubfeld, wodurch insbesondere während des Fahrens des Kraftfahrzeugs auftretende Schwingungen gedämpft werden sollen. Insbesondere sollen dadurch die Fahrsicherheit und der Fahrkomfort des mit dem erfindungsgemäßen Aussteifungssystem 1 ausgestatteten Kraftfahrzeug 4 erhöht werden.

Verbunden werden kann die Aussteifungsstruktur 1 mit dem V-förmigen Bügel 5 bzw. dem Hinterachsquerträger 3, beispielsweise über Schrauben, wobei die Aussteifungsstruktur 1 an ihrem vorderen Ende von unten an den Hinterachsquerträger 3 angeschraubt ist. In gleicher Weise können auch die beiden Diagonalstreben 7, 7' am Hinterachsquerträger 3 bzw. an der Karosseriestruktur des Kraftfahrzeuges 4 befestigt werden.

Der V-förmige Bügel 5 kann einteilig, das heißt mit fest miteinander verbundenen Streben 6 und 6' ausgebildet sein, wobei auch denkbar ist, dass die beiden Streben 6, 6' getrennt ausgeführt und separat am hinteren Ende der Aussteifungsstruktur 1 angebunden, insbesondere angeschraubt sind.

Um eine möglichst hohe Steifigkeit zu erzielen, ist die ringartig geschlossene Aussteifungsstruktur 1 aus einem umlaufenden Hohlquerschnittsprofil, insbesondere aus einem Vierkantrohr aus Stahl, ausgebildet. Derartige Hohlquerschnitte weisen aufgrund ihres großen Flächenträgheitsmoments sowie ihres Widerstandsmomentes eine besonders hohe Biegesteifigkeit auf, bei gleichzeitig geringem Gewicht. Insbesondere letzter Aspekt ist beim Bau von Sportwagen von besonderer Bedeutung. Das Hohlquerschnittsprofil kann im Querschnitt aber auch rund, oval, dreieckig oder mehreckig ausgebildet sein.

Gemäß Fig. 2 ist die erfindungsgemäße Aussteifungsstruktur 1 in ihrem am Kraftfahrzeug 4 eingebauten Zustand zu sehen, wobei durch die drei parallelen Pfeile 8 eine mögliche Schraubrichtung zum Befestigen der Aussteifungsstruktur 1 am Hinterachsquerträger 3 gekennzeichnet ist.

Wie der Fig. 2 zu entnehmen ist, verläuft die Aussteifungsstruktur 1 im Wesentlichen parallel zu einem Unterboden des Kraftfahrzeuges 4 und damit im wesentlichen parallel zu einer Fahrbahn, bei später vollständig montiertem Kraftfahrzeug 4. Aufgrund dieser Tatsache kann die Aussteifungsstruktur 1 als Träger einer nicht gezeigten Unterbodenverkleidung dienen, welcher das Befestigen einer derartigen Unterbodenverkleidung bzw. von Teilen davon im Vergleich zur Befestigung am übrigen Unterboden deutlich vereinfacht. Da die Unterbodenverkleidung nicht nur einen Schutz des Unterbodens vor Beschädigungen bieten soll, sondern zugleich auch wichtige aerodynamische Aufgaben übernimmt, ist die zuverlässige Anbindung einer derartigen Unterbodenverkleidung von besonderer Bedeutung. An einem üblicherweise stark zerklüfteten Unterboden fällt eine derartige zuverlässige Anbindung mitunter jedoch schwer, so dass die Aussteifungsstruktur 1 das Anbringen der Unterbodenverkleidung ebenfalls erheblich erleichtert.

Wie der Fig. 2 weiter zu entnehmen ist, kann die Aussteifungsstruktur 1 weitere Versteifungselemente 9 aufweisen, welche eine zusätzliche aussteifende Wirkung besitzen. Ein derartiger Aussteifungselement 9 ist in Fig. 2 im vorderen Endbereich der Aussteifungsstruktur 1 gezeigt und erstreckt sich in diesem Beispiel in Fahrzeugquerrichtung. Das Aussteifungselement 9 kann beispielsweise an die ringartig geschlossene Aussteifungsstruktur 1 angeschweißt werden.

Betrachtet man die Form der Aussteifungsstruktur 1 näher, so fällt auf, dass sie in ihrem vorderen Bereich im wesentlichen einen quer zur Fahrtrichtung 2 verlaufenden Bereich sowie entgegen der Fahrtrichtung 2 nach hinten sich daran anschließend zwei parallel zur Fahrtrichtung 2 verlaufende seitliche Bereiche 10 und 10' aufweist. Denkbar ist hierbei, dass insbesondere zwischen den seitlichen Bereichen 10 und 10' weitere, nicht gezeigte, Aussteifungselemente vorgesehen sind. Entgegen der Fahrtrichtung 2 verjüngt sich die Aussteifungsstruktur 1, wobei die beiden seitlichen Bereiche 10 und 10' in Richtung des V-förmigen Bügels 5 aufeinander zulaufen und in einem hinteren Endbereich, welcher sich quer zur Fahrtrichtung erstreckt, münden. In diesem Endbereich erfolgt die Befestigung der Aussteifungsstruktur 1 am V-förmigen Bügel 5 bzw. den einzelnen Streben 6 und 6', beispielsweise ebenfalls durch ein Verschrauben. Eine Befestigung der Aussteifungsstruktur 1 durch eine Verschraubung bietet dabei den großen Vorteil, dass diese im Falle einer Wartung bzw. einer Reparatur leicht auszutauschen und dadurch zu ersetzen ist.

Mit der erfindungsgemäßen Aussteifungsstruktur 1 kann somit eine effektive Aussteifung des Kraftfahrzeuges 4, insbesondere sofern dieses als Cabriolet ausgebildet ist, erreicht werden, bei zugleich einfachstem Handling, das heißt einer sehr einfachen Montage der Aussteifungseinrichtung 1 am Kraftfahrzeug 4. Durch die Verwendung von Hohlprofilen kann zudem eine gewichtsoptimierte Aussteifungsstruktur 1 erzielt werden, welche jedoch hohe Steifigkeitswerte aufweist.

## Patentansprüche

1. Kraftfahrzeug (4) mit einem Hinterachsquerträger (3), von dem V-förmig nach vorne zwei Diagonalstreben (7, 7') abgehen, die mit ihrem jeweils vorderen Ende an einem Fahrzeuglängsträger angebunden sind, **dadurch gekennzeichnet, dass** in Fahrtrichtung (2) gesehen hinter dem Hinterachsquerträger (3) eine ringartig geschlossene Aussteifungsstruktur (1) vorgesehen ist, die mit ihrem vorderen Ende an den Hinterachsquerträger (3) und mit ihrem hinteren Ende über V-förmig nach hinten abgehende Streben (6, 6') an hinteren Fahrzeuglängsträgern abgestützt ist, wobei die ringartig geschlossene Aussteifungsstruktur (1) aus einem umlaufenden, Hohlquerschnittsprofil ausgebildet ist..

2. Kraftfahrzeug nach Anspruch 1, **dadurch gekennzeichnet, dass** die ringartig geschlossene Aussteifungsstruktur (1) von unten an den Hinterachsquerträger (3) angeschlossen, insbesondere angeschraubt ist.

3. Kraftfahrzeug nach Anspruch 1 oder 2, **dadurch gekennzeichnet, dass** die V-förmig nach hinten abgehenden Streben (6, 6') im Bereich des hinteren Endes der Aussteifungsstruktur (1) miteinander verbunden, insbesondere einteilig durchgehend ausgebildet sind.

4. Kraftfahrzeug nach einem der Ansprüche 1 bis 3, **dadurch gekennzeichnet, dass** die ringartig geschlossene Aussteifungsstruktur (1) aus einem Vierkantrohr aus Stahl ausgebildet ist.

5. Kraftfahrzeug nach einem der Ansprüche 1 bis 4, **dadurch gekennzeichnet, dass** die ringartig geschlossene Aussteifungsstruktur (1) mit ihrem hinteren Ende mit der V-förmigen Strebe (6, 6') verschraubt ist.

6. Kraftfahrzeug nach einem der Ansprüche 1 bis 5, **dadurch gekennzeichnet, dass** die Aussteifungsstruktur (1) als Träger einer Unterbodenverkleidung ausgebildet ist.

7. Kraftfahrzeug nach einem der Ansprüche 1 bis 6, **dadurch gekennzeichnet, dass** die Aussteifungsstruktur (1) im Wesentlichen parallel zu einem Unterboden des Kraftfahrzeuges (4) verläuft.

8. Kraftfahrzeug nach einem der Ansprüche 1 bis 7, **dadurch gekennzeichnet, dass** die Aussteifungsstruktur (1) zumindest an ihrem vorderen, an den Hinterachsquerträger (3) angebundenen Ende verstärkt ist.

9. Kraftfahrzeug nach einem der Ansprüche 1 bis 8, **dadurch gekennzeichnet, dass** sich die Aussteifungsstruktur (1) entgegen der Fahrtrichtung (2) gesehen nach hinten trapezartig verjüngt.

## Claims

1. Motor vehicle (4) having a rear axle cross member (3), from which two diagonal struts (7, 7') project forward in a V-shape, which diagonal struts (7, 7') are connected with their front end in each case to a vehicle longitudinal member, **characterized in that** an annular, closed stiffening structure (1) is provided behind the rear axle cross member (3) as viewed in the direction of travel (2), which stiffening structure (1) is supported with its front end on the rear axle cross member (3) and with its rear end, via struts (6, 6') which project rearward in a V-shape, on rear vehicle longitudinal members, the annular, closed stiffening structure (1) being formed from an encircling, hollow cross-sectional profile.

2. Motor vehicle according to Claim 1, **characterized in that** the annular, closed stiffening structure (1) is connected, in particular screwed, to the rear axle cross member (3) from below.

3. Motor vehicle according to Claim 1 or 2, **characterized in that** the struts (6, 6') which project rearward in a V-shape are connected to one another, in particular are formed so as to be of continuous single-piece design, in the region of the rear end of the stiffening structure (1).

4. Motor vehicle according to one of Claims 1 to 3, **characterized in that** the annular, closed stiffening structure (1) is formed from a tetragonal tube composed of steel.

5. Motor vehicle according to one of Claims 1 to 4, **characterized in that** the annular, closed stiffening structure (1) is screwed with its rear end to one of the V-shaped struts (6, 6').

6. Motor vehicle according to one of Claims 1 to 5, **characterized in that** the stiffening structure (1) is formed as a carrier for an underbody lining.

7. Motor vehicle according to one of Claims 1 to 6, **characterized in that** the stiffening structure (1) runs substantially parallel to an underbody of the motor vehicle (4).

8. Motor vehicle according to one of Claims 1 to 7, **characterized in that** the stiffening structure (1) is reinforced at least at its front end which is connected to the rear axle cross member (3).

9. Motor vehicle according to one of Claims 1 to 8, **characterized in that** the stiffening structure (1) tapers rearward, counter to the direction of travel (2), in a trapezoidal fashion.

## Revendications

1. Véhicule automobile (4) comprenant un support transversal d'essieu arrière (3) duquel partent deux montants en diagonale (7, 7') en forme de V vers l'avant, qui sont reliés par leur extrémité avant respective à un support longitudinal du véhicule, **caractérisé en ce que**, vu dans la direction de conduite (2) derrière le support transversal d'essieu arrière (3), est prévue une structure de rigidification (1) fermée en forme de boucle, qui est supportée par son extrémité avant sur le support transversal d'essieu arrière (3) et par son extrémité arrière par le biais de montants (6, 6') partant en forme de V vers l'arrière sur des supports longitudinaux arrière du véhicule, la structure de rigidification (1) fermée en forme de boucle étant réalisée en un profilé périphérique de section transversale creuse.

2. Véhicule automobile selon la revendication 1, **caractérisé en ce que** la structure de rigidification (1) fermée en forme de boucle est raccordée par le dessous au support transversal d'essieu arrière (3), notamment par vissage.

3. Véhicule automobile selon la revendication 1 ou 2, **caractérisé en ce que** les montants (6, 6') partant en forme de V vers l'arrière sont raccordés l'un à l'autre dans la région de l'extrémité arrière de la structure de rigidification (1), notamment sont réalisés sous forme continue d'une seule pièce.

4. Véhicule automobile selon l'une quelconque des revendications 1 à 3, **caractérisé en ce que** la structure de rigidification (1) fermée en forme de boucle est réalisée à partir d'un tube d'acier à quatre pans.

5. Véhicule automobile selon l'une quelconque des revendications 1 à 4, **caractérisé en ce que** la structure de rigidification (1) fermée en forme de boucle est vissée avec son extrémité arrière au montant (6, 6') en forme de V.

6. Véhicule automobile selon l'une quelconque des revendications 1 à 5, **caractérisé en ce que** la structure de rigidification (1) est réalisée sous forme de support d'un habillage de dessous de caisse.

7. Véhicule automobile selon l'une quelconque des revendications 1 à 6, **caractérisé en ce que** la structure de rigidification (1) s'étend essentiellement parallèlement à un dessous de caisse du véhicule automobile (4).

8. Véhicule automobile selon l'une quelconque des revendications 1 à 7, **caractérisé en ce que** la structure de rigidification (1) est renforcée au moins au niveau de son extrémité avant raccordée au support transversal d'essieu arrière (3).

9. Véhicule automobile selon l'une quelconque des revendications 1 à 8, **caractérisé en ce que** la structure de rigidification (1) se rétrécit vers l'arrière de manière trapézoïdale, vu dans le sens opposé à la direction de conduite (2).
